# EUROPEAN PATENT APPLICATION

(11) **EP 4 799 887 A1**
(43) Date of publication of application: **02.09.2026**
(21) Application number: 24896533.7
(22) Date of filing: 26.11.2024
(51) Int. Cl.: B60W 30/06, B60W 10/08

(54) **LONGITUDINAL CONTROL METHOD AND APPARATUS**

(30) Priority: 28.11.2023 CN 202311615612
(71) Applicant: Yinwang Intelligent Technologies Co., Ltd., Shenzhen, Guangdong 518110 (CN)
(72) Inventor: XIN, Fulong, Shenzhen, Guangdong 518110 (CN); DENG, Xiren, Shenzhen, Guangdong 518110 (CN); CHEN, Yongshang, Shenzhen, Guangdong 518110 (CN); XIA, Qing, Shenzhen, Guangdong 518110 (CN)
(74) Representative: MERH-IP Matias Erny Reichl Hoffmann Patentanwälte PartG mbB
(86) International application number: PCT/CN2024/134615
(87) International publication number: WO 2025/113446

(57) **Abstract**

This application provides a longitudinal control method and apparatus. The longitudinal control method may be applied to a longitudinal control system that includes an autonomous driving controller, a motor controller, and a hydraulic braking controller. The method includes: The autonomous driving controller obtains braking requirement torque. The autonomous driving controller sends a first instruction to the motor controller and a second instruction to the hydraulic braking controller based on a relationship between the braking requirement torque and maximum regenerative torque of the motor controller. The motor controller controls, according to the first instruction, a drive motor to perform electric braking. The hydraulic braking controller controls, according to the second instruction, a hydraulic actuator to perform a corresponding operation. Embodiments of this application can be applied to an intelligent vehicle or an electric vehicle, to help reduce a delay in a braking process, thereby helping improve driving safety of a user.

## Description

This application claims priority to Chinese Patent Application No. 202311615612.7, filed with the China National Intellectual Property Administration on November 28, 2023 and entitled "LONGITUDINAL CONTROL METHOD AND APPARATUS", which is incorporated herein by reference in its entirety.

### TECHNICAL FIELD

This application relates to the field of intelligent driving, and more specifically, to a longitudinal control method and apparatus.

### BACKGROUND

With intelligence development of vehicles, an autonomous driving technology is gradually being applied in reality. After planning a traveling trajectory, an autonomous driving system of a vehicle can control and track the traveling trajectory. For example, after the vehicle is started and detects an obstacle (for example, a pedestrian) that suddenly appears in front of the vehicle, an autonomous emergency braking (autonomous emergency braking, AEB) function is triggered, and the vehicle is controlled to perform braking, to avoid a safety risk. For another example, if an obstacle (for example, a pedestrian or a small animal) appears in an automatic parking process, the vehicle needs to be controlled to perform braking in a timely manner, to avoid a safety risk.

Therefore, how to reduce a delay in a vehicle braking process becomes an urgent problem to be resolved.

### SUMMARY

This application provides a longitudinal control method and apparatus, to help reduce a delay in a vehicle braking process, thereby helping ensure driving safety of a user.

According to a first aspect, this application provides a longitudinal control system. The longitudinal control system includes an autonomous driving controller, a motor controller, and a hydraulic braking controller. The autonomous driving controller is connected to the motor controller, and the autonomous driving controller is connected to the hydraulic braking controller. The autonomous driving controller is configured to obtain braking requirement torque. The autonomous driving controller is further configured to send a first instruction to the motor controller and a second instruction to the hydraulic braking controller based on a relationship between the braking requirement torque and maximum regenerative torque of the motor controller. The motor controller is configured to control, according to the first instruction, a drive motor to perform electric braking. The hydraulic braking controller is configured to control, according to the second instruction, a hydraulic actuator to perform a corresponding operation.

Based on the foregoing technical solution, the autonomous driving controller may be separately directly connected to the motor controller and the hydraulic braking controller. In a braking process, the autonomous driving controller separately sends an instruction to the motor controller and an instruction to the hydraulic braking controller based on the maximum regenerative torque of the motor controller and the braking requirement torque, to control a vehicle to perform electric braking and hydraulic braking. In this way, directly connecting the autonomous driving controller to the motor controller helps reduce a delay in the braking process, thereby helping improve driving safety of a user.

In some possible implementations, the autonomous driving controller is further configured to receive information that is about actual regenerative torque of the drive motor and that is sent by the motor controller. The autonomous driving controller is further configured to send a fifth instruction to the hydraulic braking controller based on the information about the actual regenerative torque. The hydraulic braking controller is configured to control, according to the fifth instruction, a hydraulic actuator to perform a corresponding operation.

Based on the foregoing technical solution, the autonomous driving controller may further receive the information that is about the actual regenerative torque of the drive motor and that is sent by the motor controller. In this way, when the electric braking requirement torque is different from the actual regenerative torque, it can be ensured, by adjusting hydraulic braking torque, that a sum of electric braking torque and the hydraulic braking torque of the vehicle follows the braking requirement torque. This helps ensure braking performance of the vehicle, thereby helping improve driving safety of the user.

With reference to the first aspect, in some implementations of the first aspect, when the braking requirement torque is greater than the maximum regenerative torque, the first instruction indicates the maximum regenerative torque, and the second instruction indicates first hydraulic braking torque. The first hydraulic braking torque is determined based on the braking requirement torque and the maximum regenerative torque. The motor controller is configured to control, according to the first instruction, the drive motor to perform electric braking based on the maximum regenerative torque. The hydraulic braking controller is configured to control, according to the second instruction, the hydraulic actuator to output the first hydraulic braking torque.

Based on the foregoing technical solution, at an emergency braking stage, the autonomous driving controller may instruct the motor controller to perform electric braking based on a maximum regenerative capability, and instruct the hydraulic braking controller to compensate for remaining hydraulic braking torque. In this way, it can be ensured that the sum of the electric braking torque and the hydraulic braking torque of the vehicle follows the braking requirement torque. This helps ensure braking performance of the vehicle, thereby helping improve driving safety of the user.

That the braking requirement torque is greater than the maximum regenerative torque may also be understood as that the vehicle is at the emergency braking stage.

With reference to the first aspect, in some implementations of the first aspect, the autonomous driving controller is further configured to send a third instruction to the motor control and a fourth instruction to the hydraulic braking controller. The third instruction indicates first electric braking torque, and the first electric braking torque is a difference between the maximum regenerative torque and first torque. The fourth instruction indicates second hydraulic braking torque, and the second hydraulic braking torque is a sum of the first hydraulic braking torque and the first torque. The motor controller is configured to control, according to the third instruction, the drive motor to perform electric braking based on the first electric braking torque. The hydraulic braking controller is configured to control, according to the fourth instruction, the hydraulic actuator to output the second hydraulic braking torque.

Based on the foregoing technical solution, at an initial stage of emergency braking, the motor controller performs electric braking based on the maximum regenerative capability, which can reduce a braking delay during emergency braking. In a continuous emergency braking process, the electric braking torque is gradually decreased, and the hydraulic braking torque is gradually increased, so that stability of braking performance can be ensured, thereby helping improve driving safety of the user.

In some possible implementations, at the emergency braking stage, the autonomous driving controller may instruct the motor controller to always perform electric braking based on the maximum regenerative capability, and instruct the hydraulic controller to perform braking based on the first hydraulic braking torque. The first hydraulic braking torque is determined based on the braking requirement torque and the maximum regenerative capability.

With reference to the first aspect, in some implementations of the first aspect, when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling. The motor controller is configured to control, according to the first instruction, the drive motor to perform electric braking based on the braking requirement torque. The hydraulic braking controller is configured to control, according to the second instruction, the hydraulic actuator to perform pre-filling.

Based on the foregoing technical solution, at a pre-collaboration stage, the autonomous driving controller may instruct the hydraulic braking controller to perform pre-filling. In this way, after the vehicle switches from the pre-collaboration stage to an emergency braking stage, it can be ensured that hydraulic braking torque that the hydraulic braking controller controls the hydraulic actuator to output quickly reaches hydraulic braking torque expected by the autonomous driving controller. This helps reduce a braking delay during emergency braking.

That the braking requirement torque is greater than the difference between the first preset torque and the maximum regenerative torque, and is less than or equal to the maximum regenerative torque may also be understood as that the vehicle is at the pre-collaboration stage.

In some possible implementations, when the vehicle switches from the pre-collaboration stage to a conventional braking stage, the autonomous driving controller is further configured to instruct the hydraulic braking controller to release pre-filling.

With reference to the first aspect, in some implementations of the first aspect, the second instruction includes information about second preset torque. The hydraulic braking controller is configured to control, according to the second instruction, the hydraulic actuator to output the second preset torque.

Based on the foregoing technical solution, at the pre-collaboration stage, the autonomous driving controller may instruct the hydraulic braking controller to output the second preset torque. In this way, after the vehicle switches from the pre-collaboration stage to the emergency braking stage, it can be ensured that the hydraulic braking torque that the hydraulic braking controller controls the hydraulic actuator to output quickly reaches the hydraulic braking torque expected by the autonomous driving controller. This helps reduce the braking delay during emergency braking.

For example, the second preset torque may be 50 Nm.

With reference to the first aspect, in some implementations of the first aspect, the hydraulic actuator includes a caliper and a brake disc. The hydraulic braking controller is configured to control, according to the second instruction, the caliper to approach the brake disc.

Based on the foregoing technical solution, at the pre-collaboration stage, the autonomous driving controller may instruct the hydraulic braking controller to control the caliper to approach the brake disc. In this way, after the vehicle switches from the pre-collaboration stage to the emergency braking stage, it can be ensured that the hydraulic braking torque that the hydraulic braking controller controls the hydraulic actuator to output quickly reaches the hydraulic braking torque expected by the autonomous driving controller. This helps reduce the braking delay during emergency braking.

With reference to the first aspect, in some implementations of the first aspect, when the braking requirement torque is less than or equal to a difference between the maximum generative torque and first preset torque, the first instruction indicates the braking requirement torque. The motor controller is configured to control, according to the first instruction, the drive motor to perform electric braking based on the braking requirement torque. The hydraulic braking controller is configured to control, according to the second instruction, the hydraulic actuator not to operate.

Based on the foregoing technical solution, at a conventional braking stage, the autonomous driving controller may directly send an instruction to the motor controller. This helps reduce the delay in the braking process, thereby helping improve driving safety of the user.

That the braking requirement torque is less than or equal to the difference between the first preset torque and the maximum regenerative torque may also be understood as that the vehicle at the conventional braking stage.

With reference to the first aspect, in some implementations of the first aspect, the first instruction includes a deceleration rotational speed or a deceleration phase of the drive motor. The motor controller is configured to control, based on the deceleration rotational speed or the deceleration phase of the drive motor, the drive motor to perform electric braking.

Based on the foregoing technical solution, the autonomous driving controller may send the deceleration rotational speed or the deceleration phase to the motor controller, so that the motor controller can determine electric braking torque based on the deceleration rotational speed or the deceleration phase.

According to a second aspect, this application provides a longitudinal control method. The method is applied to an autonomous driving controller. The autonomous driving controller is connected to a motor controller, and the autonomous driving controller is connected to a hydraulic braking controller. The method includes: The autonomous driving controller obtains braking requirement torque. The autonomous driving controller sends a first instruction to the motor controller and a second instruction to the hydraulic braking controller based on a relationship between the braking requirement torque and maximum regenerative torque of the motor controller. The first instruction indicates the motor controller to perform electric braking, and the second instruction instructs the hydraulic braking controller to perform a corresponding operation.

With reference to the second aspect, in some implementations of the second aspect, when the braking requirement torque is greater than the maximum regenerative torque, the first instruction indicates the maximum regenerative torque, and the second instruction indicates first hydraulic braking torque. The first hydraulic braking torque is determined based on the braking requirement torque and the maximum regenerative torque.

With reference to the second aspect, in some implementations of the second aspect, the method further includes: The autonomous driving controller sends a third instruction to the motor control and a fourth instruction to the hydraulic braking controller. The third instruction indicates first electric braking torque, and the first electric braking torque is a difference between the maximum regenerative torque and first torque. The fourth instruction indicates second hydraulic braking torque, and the second hydraulic braking torque is a sum of the first hydraulic braking torque and the first torque.

With reference to the second aspect, in some implementations of the second aspect, when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling.

With reference to the second aspect, in some implementations of the second aspect, the second instruction includes information about second preset torque.

With reference to the second aspect, in some implementations of the second aspect, the second instruction is used to control a caliper to approach a brake disc.

With reference to the second aspect, in some implementations of the second aspect, when the braking requirement torque is less than or equal to a difference between the maximum generative torque and first preset torque, the first instruction indicates the braking requirement torque.

With reference to the second aspect, in some implementations of the second aspect, the first instruction includes a deceleration rotational speed or a deceleration phase of a drive motor. The deceleration rotational speed or the deceleration phase is used to determine electric braking torque.

According to a third aspect, this application provides a longitudinal control apparatus. The apparatus is used in an autonomous driving controller. The autonomous driving controller is connected to a motor controller, and the autonomous driving controller is connected to a hydraulic braking controller. The apparatus includes: an obtaining unit, configured to obtain braking requirement torque; and a sending unit, configured to send a first instruction to the motor controller and a second instruction to the hydraulic braking controller based on a relationship between the braking requirement torque and maximum regenerative torque of the motor controller. The first instruction indicates the motor controller to perform electric braking, and the second instruction instructs the hydraulic braking controller to perform a corresponding operation.

With reference to the third aspect, in some implementations of the third aspect, when the braking requirement torque is greater than the maximum regenerative torque, the first instruction indicates the maximum regenerative torque, and the second instruction indicates first hydraulic braking torque. The first hydraulic braking torque is determined based on the braking requirement torque and the maximum regenerative torque.

With reference to the third aspect, in some implementations of the third aspect, the sending unit is further configured to: send a third instruction to the motor control and a fourth instruction to the hydraulic braking controller. The third instruction indicates first electric braking torque, and the first electric braking torque is a difference between the maximum regenerative torque and first torque. The fourth instruction indicates second hydraulic braking torque, and the second hydraulic braking torque is a sum of the first hydraulic braking torque and the first torque.

With reference to the third aspect, in some implementations of the third aspect, when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling.

With reference to the third aspect, in some implementations of the third aspect, the second instruction includes information about second preset torque.

With reference to the third aspect, in some implementations of the third aspect, the second instruction is used to control a caliper to approach a brake disc.

With reference to the third aspect, in some implementations of the third aspect, when the braking requirement torque is less than or equal to a difference between the maximum generative torque and first preset torque, the first instruction indicates the braking requirement torque.

With reference to the third aspect, in some implementations of the third aspect, the first instruction includes a deceleration rotational speed or a deceleration phase of a drive motor. The deceleration rotational speed or the deceleration phase is used to determine electric braking torque.

According to a fourth aspect, this application provides a longitudinal control apparatus. The apparatus includes a processing unit and a storage unit. The storage unit is configured to store instructions. The processing unit executes the instructions stored in the storage unit, so that the apparatus performs any possible method in the second aspect.

According to a fifth aspect, this application provides an autonomous driving controller. The autonomous driving controller includes any possible apparatus in the third aspect, or includes the apparatus in the fourth aspect.

According to a sixth aspect, this application provides a vehicle. The vehicle includes any possible apparatus in the third aspect, or includes the apparatus in the fourth aspect, or includes the autonomous driving controller in the fifth aspect.

According to a seventh aspect, this application provides a computer program product. The computer program product includes computer program code. When the computer program code is run on a computer, the computer is enabled to perform any possible method in the second aspect.

It should be noted that all or a part of the computer program code may be stored in a first storage medium. The first storage medium may be packaged together with a processor, or may be packaged separately from a processor. This is not specifically limited in embodiments of this application.

According to an eighth aspect, this application provides a computer-readable medium. The computer-readable medium stores program code. When the computer program code is run on a computer, the computer is enabled to perform any possible method in the second aspect.

According to a ninth aspect, this application provides a chip. The chip includes a circuit. The circuit is configured to perform any possible method in the second aspect.

### BRIEF DESCRIPTION OF DRAWINGS

FIG. 1 is a functional block diagram of a vehicle according to an embodiment of this application;
FIG. 2 is a diagram of a system architecture according to an embodiment of this application;
FIG. 3 is another diagram of a system architecture according to an embodiment of this application;
FIG. 4 is a schematic flowchart of a longitudinal control method according to an embodiment of this application; and
FIG. 5 is a block diagram of a longitudinal control apparatus according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

In embodiments of this application, prefix words such as "first" and "second" are used only to distinguish different described objects, and do not limit locations, sequences, priorities, quantities, content, or the like of the described objects. Use of prefix words such as ordinal numbers used to distinguish the described objects in embodiments of this application does not constitute a limitation on the described objects. For descriptions of the described objects, refer to the context descriptions in the claims or embodiments. The use of such prefix words should not constitute a redundant limitation. In addition, in the descriptions of embodiments, unless otherwise specified, "a plurality of" means two or more.

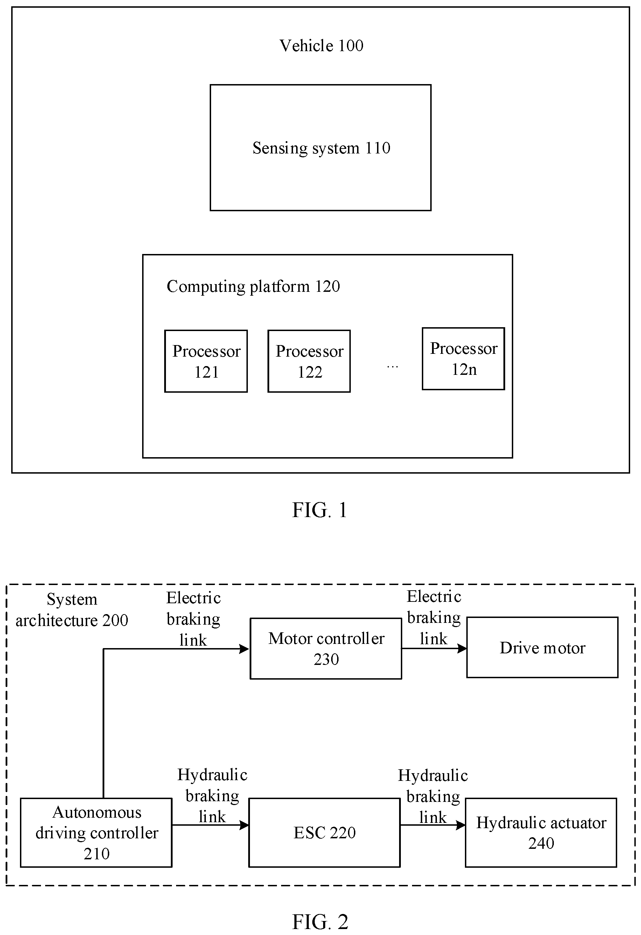

FIG. 1 is a functional block diagram of a vehicle 100 according to an embodiment of this application. The vehicle 100 may include a sensing system 110 and a computing platform 120. The sensing system 110 may include one or more sensors that sense and measure information about an ambient environment of the vehicle 100. For example, the sensing system 110 may include one or more collision sensors. For another example, the sensing system 110 may include a positioning system. The positioning system may be a global positioning system (global positioning system, GPS), a BeiDou system, or another positioning system. For still another example, the sensing system 110 may include one or more of an inertial measurement unit (inertial measurement unit, IMU), a lidar, a millimeter-wave radar, an ultrasonic radar, and a camera apparatus.

A part of or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit that has a capability of reading and running instructions, for example, a central processing unit (central processing unit, CPU), a microprocessor, a graphics processing unit (graphics processing unit, GPU) (may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of a part or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and a part or all of the processors 121 to 12n may invoke the instructions in the memory, to implement a corresponding function.

The computing platform 120 may include an autonomous driving controller and a motor controller. The autonomous driving controller may obtain data by using a plurality of sensors (including but not limited to: the lidar, the millimeter-wave radar, the camera apparatus, an ultrasonic sensor, the global positioning system, and the inertia measurement unit) in the vehicle, and analyze and process the obtained data, to implement functions such as obstacle sensing, target recognition, vehicle positioning, route planning, and driver monitoring/reminder. In this way, driving safety, automation, and comfort of the vehicle are improved. For example, when performing longitudinal control on the vehicle, the autonomous driving controller may send, to the motor controller, an instruction (which may be a drive instruction or a braking instruction) used to determine a rotational speed of a motor. The motor controller may control, according to the instruction, a drive motor to output torque, so that the torque is transmitted to driving wheel through a mechanical transmission system, to implement longitudinal control on the vehicle.

Under different autonomous driving levels (L0 to L5), the autonomous driving controller may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, the level L1 indicates driving assistance, the level L2 indicates partial automation, the level L3 indicates conditional automation, the level L4 indicates high automation, and the level L5 indicates full automation. Tasks of monitoring and responding to road conditions at the levels L1 to L3 are jointly completed by a driver and a system, and the driver needs to take over a dynamic driving task. The levels L4 and L5 allow the driver to be completely transformed into a passenger.

Currently, functions that can be implemented by the autonomous driving controller mainly include but are not limited to: adaptive cruise, autonomous emergency braking, automatic parking, blind spot monitoring, traffic warning/braking for a front crossroad, traffic warning/braking for a rear crossroad, preceding vehicle collision warning, lane deviation warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, the automatic parking may include APA, RPA, AVP, and the like. For the APA, the driver does not need to control a steering wheel, but still needs to control a throttle and a brake in the vehicle. For the RPA, the driver may remotely park the vehicle outside the vehicle by using a terminal (for example, a mobile phone). For the AVP, the vehicle may complete parking without the driver. In terms of the corresponding autonomous driving levels, the APA is approximately at the level L1, the RPA is approximately between the levels L2 to L3, and the AVP is approximately at the level L4.

The vehicle in embodiments of this application is a vehicle in a broad sense, and may be a transportation tool (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

FIG. 2 is a diagram of a system architecture 200 according to an embodiment of this application. As shown in FIG. 2, the system architecture 200 includes an autonomous driving controller 210, an electronic stability controller (electronic stability controller, ESC) 220, a motor controller 230, a hydraulic actuator 240, and a drive motor. A link from the autonomous driving controller 210 to the motor controller 230 and then from the motor controller 230 to the drive motor may be referred to as an electric braking link. A link from the autonomous driving controller 210 to the ESC 220 and then from the ESC 220 to the hydraulic actuator 240 may be referred to as a hydraulic braking link.

The following describes the system architecture 200 based on a conventional braking stage, a pre-filling stage, and an emergency braking stage.

### Conventional braking stage

For example, when determining that braking requirement torque is less than or equal to a difference between a maximum regenerative capability of the motor controller and an offset value, the autonomous driving controller 210 may determine that a current vehicle is at the conventional braking stage. In this case, the autonomous driving controller 210 may calculate a deceleration or a deceleration curve of the vehicle, to calculate at least one of required electric braking torque, an expected deceleration rotational speed, or an expected deceleration phase.

For example, the offset value may be 100 Nm.

For example, after calculating information about the electric braking torque, the autonomous driving controller 210 may send the information about the electric braking torque to the motor controller 230. The motor controller 230 may control, based on the information about the electric braking torque, the drive motor to perform electric braking.

For another example, after calculating the expected deceleration rotational speed or the expected deceleration phase, the autonomous driving controller 210 may send information about the expected deceleration rotational speed or the expected deceleration phase to the motor controller 230. The motor controller 230 may obtain the electric braking torque through calculation based on the expected deceleration rotational speed or the expected deceleration phase, and control, based on the electric braking torque, the drive motor to perform electric braking.

An example in which the vehicle performs electric braking via a rear axle is used. The braking requirement torque may be 1000 Nm, and a maximum regenerative capability of a rear axle motor controller is 1800 Nm. In this case, the braking requirement torque is less than the maximum regenerative capability of the rear axle motor controller minus the offset value. The autonomous driving controller 210 may send the information about electric braking torque (for example, 1000 Nm) to the rear axle motor controller. After receiving the information about the electric braking torque, the rear axle motor controller may control, based on the electric braking torque, the drive motor to perform electric braking.

An example in which the vehicle performs electric braking via a front axle and a rear axle is used. The braking requirement torque may be 1000 Nm, and a maximum regenerative capability of a front axle motor controller and a rear axle motor controller is 1800 Nm. In this case, the autonomous driving controller 210 may determine, based on a preset allocation ratio (for example, 3:2), that first electric braking torque of the front axle motor controller is 600 Nm and second electric braking torque of the rear axle motor controller is 400 Nm. The autonomous driving controller 210 may send information about the first electric braking torque to the front axle motor controller and information about the second electric braking torque to the rear axle motor controller.

In this embodiment of this application, because the autonomous driving controller 210 directly controls the motor controller 230, the ESC 220 and a vehicle domain controller (vehicle domain controller, VDC) are not needed. This can reduce a length of the electric braking link, to help reduce a delay in a vehicle braking process, thereby helping ensure driving safety of a user.

### Pre-collaboration stage

For example, when determining that braking requirement torque is greater than a difference between a maximum regenerative capability of the motor controller 230 and an offset value, and is less than or equal to the maximum regenerative capability of the motor controller 230, the autonomous driving controller 210 may determine that a current vehicle is at the pre-collaboration stage. In this case, the autonomous driving controller 210 may calculate a deceleration or a deceleration curve of the vehicle, to calculate at least one of required electric braking torque, an expected deceleration rotational speed, or an expected deceleration phase.

The autonomous driving controller 210 may send at least one of the electric braking torque, the expected deceleration rotational speed, or the expected deceleration phase to the motor controller 230, and the autonomous driving controller 210 may send a pre-filling (pre-filling) instruction to the ESC 220. The pre-filling instruction may instruct the ESC 220 to perform pre-filling.

For example, when receiving the pre-filling instruction, the ESC 220 may control a caliper of the vehicle to approach a brake disc, to eliminate a gap between the caliper and the brake disc.

For example, the pre-filling instruction carries information about a preset braking torque value. When receiving the pre-filling instruction, the ESC 220 may control the hydraulic actuator 240 based on the preset torque value.

For example, the preset braking torque value is 50 Nm.

An example in which the vehicle performs electric braking via a rear axle is used. The braking requirement torque may be 1750 Nm, and a maximum regenerative capability of a rear axle motor controller is 1800 Nm. In this case, the braking requirement torque is greater than a difference between a maximum regenerative capability of the rear axle motor controller and an offset value, and is less than the maximum regenerative capability of the rear axle motor controller. The autonomous driving controller 210 may send the information about electric braking torque (for example, 1750 Nm) to the rear axle motor controller. After receiving the information about the electric braking torque, the rear axle motor controller may control, based on the electric braking torque, the drive motor to perform electric braking. In addition, the autonomous driving controller 210 may send a pre-filling instruction to the ESC 220. The pre-filling instruction indicates the ESC 220 to control a caliper to approach a brake disc.

An example in which the vehicle performs electric braking via a front axle and a rear axle is used. The braking requirement torque may be 1750 Nm, and a maximum regenerative capability of a front axle motor controller and a rear axle motor controller is 1800 Nm. In this case, the autonomous driving controller 210 may determine, based on a preset allocation ratio (for example, 3:2), that third electric braking torque of the front axle motor controller is 1050 Nm and fourth electric braking torque of the rear axle motor controller is 700 Nm. The autonomous driving controller 210 may send information about the third electric braking torque to the front axle motor controller and information about the fourth electric braking torque to the rear axle motor controller. In addition, the autonomous driving controller 210 may send a pre-filling instruction to the ESC 220. The pre-filling instruction indicates the ESC 220 to control a caliper to approach a brake disc.

### Emergency braking stage

For example, when determining that braking requirement torque is greater than a maximum regenerative capability of the motor controller 230, the autonomous driving controller 210 may determine that a current vehicle is at the emergency braking stage. In this case, the autonomous driving controller 210 may instruct the motor controller 230 to perform electric braking based on the maximum regenerative capability. For example, the autonomous driving controller 210 may send information about the maximum regenerative capability to the motor controller 230, or an expected deceleration or an expected deceleration phase that is determined based on the maximum regenerative capability. In addition, the autonomous driving controller 210 may send a braking instruction to the ESC 220. The braking instruction includes information about fifth hydraulic braking torque, and the fifth hydraulic braking torque is equal to the braking requirement torque minus the maximum regenerative capability. The ESC 220 may control, based on the fifth hydraulic braking torque, the hydraulic actuator 240 to operate. In this way, hydraulic braking torque is compensated to the hydraulic actuator, so that it can be ensured that a sum of electric braking torque and the hydraulic braking torque is equal to the braking requirement torque, which implements quick braking control in an emergency working condition.

An example in which the vehicle performs electric braking via a rear axle is used. The braking requirement torque may be 3000 Nm, and a maximum regenerative capability of a rear axle motor controller is 1800 Nm. In this case, the braking requirement torque is greater than the maximum regenerative capability of the motor controller. The autonomous driving controller 210 may instruct the rear axle motor controller to perform braking and regeneration based on the maximum regenerative capability (for example, 1800 Nm) of the motor controller. After receiving the information about the electric braking torque, the rear axle motor controller may control, based on the maximum regenerative capability of the motor controller, the drive motor to perform electric braking. In addition, the autonomous driving controller 210 may send a braking instruction to the ESC 220. The pre-filling instruction includes information indicating that the hydraulic braking torque is 1200 Nm. The ESC 220 may control the hydraulic actuator 240 to output hydraulic braking torque of 1200 Nm.

Optionally, in the foregoing emergency braking process, the autonomous driving controller 210 may control the electric braking torque to gradually decrease and control the hydraulic braking torque to gradually increase.

For example, at a moment T₁, the autonomous driving controller 210 may instruct the rear axle motor controller to perform braking and regeneration based on the maximum regenerative capability (for example, 1800 Nm) of the motor controller, and send a braking instruction to the ESC 220. The pre-filling instruction includes information indicating that the hydraulic braking torque is 1200 Nm.

For example, at a moment T₁+△t, the autonomous driving controller 210 may send information indicating that the electric braking torque is 1700 Nm to the rear axle motor controller and a braking instruction to the ESC 220. The pre-filling instruction includes information indicating that the hydraulic braking torque is 1300 Nm.

For example, at a moment T₁+2△t, the autonomous driving controller 210 may send information indicating that the electric braking torque is 1600 Nm to the rear axle motor controller and a braking instruction to the ESC 220. The pre-filling instruction includes information indicating that the hydraulic braking torque is 1400 Nm.

By analogy, at a moment T₁+18△t, the autonomous driving controller 210 may send information indicating that the electric braking torque is 0 Nm to the rear axle motor controller and a braking instruction to the ESC 220. The pre-filling instruction includes information indicating that the hydraulic braking torque is 3000 Nm. In this way, in the emergency braking process, the electric braking torque gradually decreases, and the hydraulic braking torque gradually increases. This improves stability of braking performance. In addition, a sum of the electric braking torque and the hydraulic braking torque may always follow total requirement torque, which helps ensure that total braking torque of the vehicle follows the braking requirement torque.

For example, △t is 10 ms.

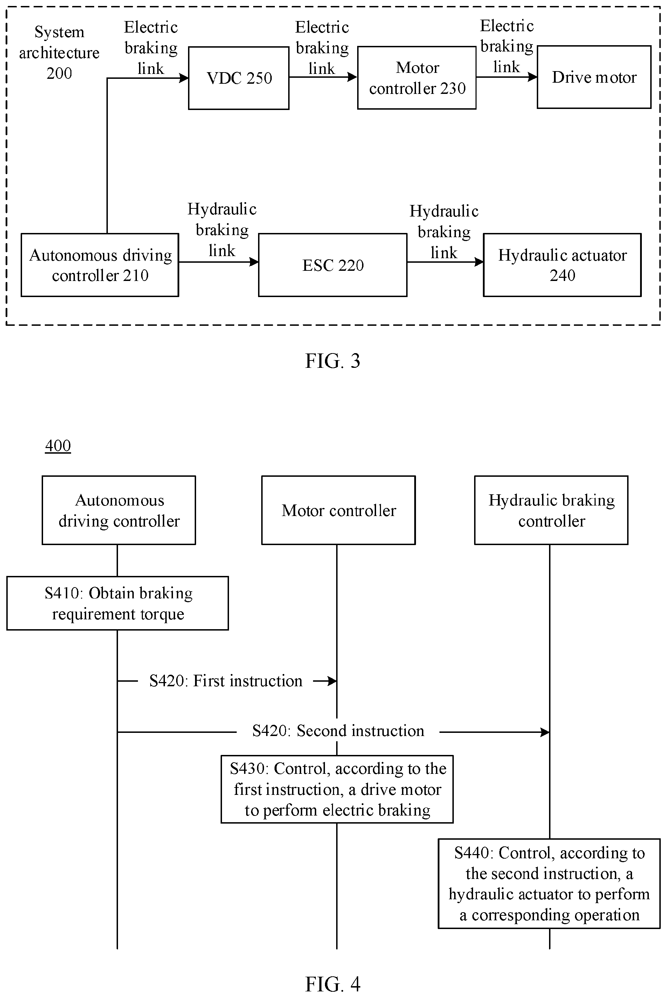

FIG. 3 is another diagram of the system architecture 200 according to an embodiment of this application. Compared with the system architecture shown in FIG. 2, in the system architecture shown in FIG. 3, the autonomous driving controller 210 communicates with the motor controller 230 via a vehicle domain controller (vehicle domain controller, VDC) 250. For example, after receiving an instruction sent by the autonomous driving controller, the VDC 250 may arbitrate a deceleration rotational speed carried in the instruction. If determining that the deceleration rotational speed carried in the instruction is less than a maximum rotational speed of the drive motor, the VDC 250 may forward the instruction to the motor controller 230.

FIG. 4 is a schematic flowchart of a longitudinal control method 400 according to an embodiment of this application. The longitudinal control method 400 may be performed by a longitudinal control system that includes an autonomous driving controller, a motor controller, and a hydraulic braking controller (for example, the foregoing ESC). The autonomous driving controller is connected to the motor controller, and the autonomous driving controller is connected to the hydraulic braking controller. The method 400 includes the following steps.

S410: The autonomous driving controller obtains braking requirement torque.

Optionally, the vehicle is in an autonomous driving state. For example, the vehicle is in a state in which an adaptive cruise control (adaptive cruise control, ACC) function, an integrated cruise assistant (integrated cruise assistant, ICA) function, or a navigation cruise assistant (navigation cruise assistant, NCA) function is enabled. In a process in which the vehicle is in the autonomous driving state, if detecting that an obstacle (for example, a pedestrian crossing a road) suddenly appears in front of the vehicle, the autonomous driving controller may determine the braking requirement torque based on a current traveling parameter of the vehicle and information about the obstacle. For example, when the vehicle detects that the vehicle is about to reach an intersection and an intersection indicator is red, the autonomous driving controller may determine the braking requirement torque based on the current traveling parameter and a distance between the vehicle and the intersection.

Optionally, the vehicle is in a manual driving state, and the vehicle is equipped with an autonomous emergency braking (autonomous emergency braking, AEB) function. When detecting that an obstacle (for example, a pedestrian crossing a road) suddenly appears in front of the vehicle, the autonomous driving controller may trigger the AEB function based on a current traveling parameter of the vehicle and information about the obstacle, and determine the braking requirement torque based on the current travelling parameter of the vehicle and the information about the obstacle.

S420: The autonomous driving controller sends a first instruction to the motor controller and a second instruction to the hydraulic braking controller based on a relationship between the braking requirement torque and maximum regenerative torque of the motor controller.

Optionally, the autonomous driving controller may send an instruction to the motor controller and an instruction to the hydraulic braking controller based on a preset period. For example, the preset period may be 10 ms.

Braking scenarios in which the vehicle is located may be classified into a conventional braking stage, a pre-collaboration stage, and an emergency braking stage based on the relationship between the maximum regenerative torque of the motor controller and the braking requirement torque. For a specific classification process, refer to descriptions in the foregoing embodiment. Details are not described herein again.

S430: The motor controller controls, according to the first instruction, a drive motor to perform electric braking.

S440: The hydraulic braking controller controls, according to the second instruction, a hydraulic actuator to perform a corresponding operation.

There is no actual sequence between S430 and S440.

Optionally, when the braking requirement torque is greater than the maximum regenerative torque, the first instruction indicates the maximum regenerative torque, and the second instruction indicates first hydraulic braking torque. The first hydraulic braking torque is determined based on the braking requirement torque and the maximum regenerative torque. That the motor controller controls, according to the first instruction, the drive motor to perform electric braking includes: the motor controller controls, according to the first instruction, the drive motor to perform electric braking based on the maximum regenerative torque. That the hydraulic braking controller controls, according to the second instruction, the hydraulic actuator to perform the corresponding operation includes: the hydraulic braking controller controls, according to the second instruction, the hydraulic actuator to output the first hydraulic braking torque.

Optionally, the first hydraulic braking torque is equal to the braking requirement torque minus the maximum regenerative torque.

Optionally, the method 400 further includes: The autonomous driving controller receives actual regenerative torque that is of the drive motor and that is sent by the motor controller, and the autonomous driving controller sends a fifth instruction to the hydraulic braking controller based on the maximum regenerative torque and the actual regenerative torque. The fifth instruction indicates second hydraulic braking torque, and the second hydraulic braking torque is determined based on a sum of the first hydraulic braking torque and a difference between the maximum regenerative torque and the actual regenerative torque.

For example, the braking requirement torque may be 3000 Nm, and a maximum regenerative capability of a rear axle motor controller is 1800 Nm. In this case, the braking requirement torque is greater than the maximum regenerative capability of the motor controller. The autonomous driving controller may instruct the rear axle motor controller to perform braking and regeneration based on the maximum regenerative capability (for example, 1800 Nm) of the motor controller. After receiving information about electric braking torque, the rear axle motor controller may control, based on the maximum regenerative capability of the motor controller, the drive motor to perform electric braking. In addition, the autonomous driving controller may send a braking instruction to the ESC. The braking instruction includes information indicating that the hydraulic braking torque is 1200 Nm. The ESC may control the hydraulic actuator to output hydraulic braking torque of 1200 Nm.

The autonomous driving controller may receive information that is about the actual regenerative torque (for example, 1700 Nm) and that is sent by the rear axle motor controller. The autonomous driving controller may send a braking instruction to the ESC based on the maximum regenerative capability and the actual regenerative torque. The braking instruction includes information indicating that the hydraulic braking torque is 1300 Nm. The ESC 220 may control the hydraulic actuator to output hydraulic braking torque of 1300 Nm. In this way, it can be ensured that a sum of the electric braking torque and the hydraulic braking torque of the vehicle follows the braking requirement torque. This helps ensure that braking performance of the vehicle is not affected when the actual regenerative torque is low, thereby helping improve driving safety of a user.

Optionally, the method 400 further includes: The autonomous driving controller sends a third instruction to the motor control and a fourth instruction to the hydraulic braking controller. The third instruction indicates first electric braking torque, and the first electric braking torque is a difference between the maximum regenerative torque and first torque. The fourth instruction indicates second hydraulic braking torque, and the second hydraulic braking torque is a sum of the first hydraulic braking torque and the first torque. The motor controller controls, according to the third instruction, the drive motor to perform electric braking based on the first electric braking torque. The hydraulic braking controller controls, according to the fourth instruction, the hydraulic actuator to output the second hydraulic braking torque.

For the foregoing process in which the autonomous driving controller controls the electric braking torque to gradually decrease and controls the hydraulic braking torque to gradually increase, refer to the description in the foregoing embodiment. Details are not described herein again.

Optionally, when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling. That the motor controller controls, according to the first instruction, the drive motor to perform electric braking includes: The motor controller controls, according to the first instruction, the drive motor to perform electric braking based on the braking requirement torque. That the hydraulic braking controller controls, according to the second instruction, the hydraulic actuator to perform the corresponding operation includes: The hydraulic braking controller controls, according to the second instruction, the hydraulic actuator to perform pre-filling.

For the foregoing process in which the autonomous driving controller instructs the hydraulic braking controller to perform pre-filling, refer to the description in the foregoing embodiment. Details are not described herein again.

For example, the second instruction includes information about second preset torque. That the hydraulic braking controller controls, according to the second instruction, the hydraulic actuator to perform pre-filling includes: The hydraulic braking controller controls, according to the second instruction, the hydraulic actuator to output the second preset torque.

For example, the hydraulic actuator includes a caliper and a brake disc. That the hydraulic braking controller controls, according to the second instruction, the hydraulic actuator to perform pre-filling includes: The hydraulic braking controller controls, according to the second instruction, the caliper to approach the brake disc, or eliminates a gap between the caliper and the brake disc.

Optionally, when the braking requirement torque is less than or equal to a difference between the maximum generative torque and first preset torque, the first instruction indicates the braking requirement torque. That the motor controller controls, according to the first instruction, the drive motor to perform electric braking includes: The motor controller controls, according to the first instruction, the drive motor to perform electric braking based on the braking requirement torque. That the hydraulic braking controller controls, according to the second instruction, the hydraulic actuator to perform the corresponding operation includes: The hydraulic braking controller controls, according to the second instruction, the hydraulic actuator not to operate.

Optionally, at the conventional braking stage, the autonomous driving controller may carry, in an instruction sent to the hydraulic braking controller, information indicating that the hydraulic braking torque is 0, or the autonomous driving controller may not send an instruction to the hydraulic braking controller.

Optionally, the first instruction includes a deceleration rotational speed or a deceleration phase of the drive motor. The motor controller is configured to control, based on the deceleration rotational speed or the deceleration phase of the drive motor, the drive motor to perform electric braking.

Optionally, the first instruction includes information about a first distance. The first distance is a distance between the vehicle and a target location (for example, a target parking space), and the first distance may be used to determine a quantity of circles in which the drive motor rotates.

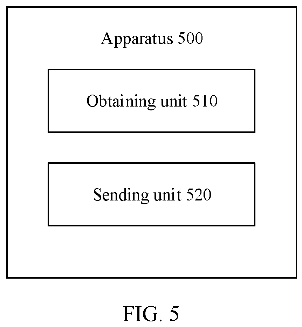

FIG. 5 is a block diagram of a longitudinal control apparatus 500 according to an embodiment of this application. The apparatus 500 is used in an autonomous driving controller. The autonomous driving controller is connected to a motor controller, and the autonomous driving controller is connected to a hydraulic braking controller. The apparatus 500 includes: an obtaining unit 510, configured to obtain braking requirement torque; and a sending unit 520, configured to send a first instruction to the motor controller and a second instruction to the hydraulic braking controller based on a relationship between the braking requirement torque and maximum regenerative torque of the motor controller. The first instruction indicates the motor controller to perform electric braking, and the second instruction instructs the hydraulic braking controller to perform a corresponding operation.

Optionally, when the braking requirement torque is greater than the maximum regenerative torque, the first instruction indicates the maximum regenerative torque, and the second instruction indicates first hydraulic braking torque. The first hydraulic braking torque is determined based on the braking requirement torque and the maximum regenerative torque.

Optionally, the sending unit 520 is further configured to: send a third instruction to the motor control and a fourth instruction to the hydraulic braking controller. The third instruction indicates first electric braking torque, and the first electric braking torque is a difference between the maximum regenerative torque and first torque. The fourth instruction indicates second hydraulic braking torque, and the second hydraulic braking torque is a sum of the first hydraulic braking torque and the first torque.

Optionally, when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling.

Optionally, the second instruction includes information about second preset torque.

Optionally, the second instruction instructs the hydraulic braking controller to control a caliper to approach a brake disc.

Optionally, when the braking requirement torque is less than or equal to a difference between the maximum generative torque and first preset torque, the first instruction indicates the braking requirement torque.

Optionally, the first instruction includes a deceleration rotational speed or a deceleration phase of a drive motor. The deceleration rotational speed or the deceleration phase is used to determine electric braking torque.

For example, the obtaining unit 510 may be the computing platform in FIG. 1, or a processing circuit, a processor, or a controller on the computing platform. For example, the obtaining unit 510 is the processor 121 in the computing platform, and the processor 121 may obtain the braking requirement torque.

For another example, the sending unit 520 may be a communication interface of the computing platform in FIG. 1. The processor 122 in the computing platform may allocate electric braking torque and hydraulic braking torque based on the braking requirement torque and the maximum regenerative capability. The processor 122 may control the communication interface to send the first instruction and the second instruction to the motor controller and the hydraulic braking controller, respectively. The first instruction includes information indicating the electric braking torque, and the second instruction includes information indicating the hydraulic braking torque.

Functions implemented by the obtaining unit 810 and determining the electric braking torque and the hydraulic braking torque may be implemented by different processors, or may be implemented by a same processor. This is not limited in embodiments of this application.

It should be understood that division into the units of the apparatus is merely logical function division. During actual implementation, all or a part of the units may be integrated into one physical entity or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any foregoing method or implement functions of the units of the apparatus. The processor is, for example, a general-purpose processor like a CPU or a microprocessor. The memory is a memory inside the apparatus or a memory outside the apparatus. Alternatively, the units of the apparatus may be implemented in a form of a hardware circuit, and functions of a part or all of the units may be implemented by designing the hardware circuit. The hardware circuit may be understood as one or more processors. For example, in an implementation, the hardware circuit is an ASIC, and functions of a part or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of a part or all of the foregoing units. All units of the foregoing apparatus may be implemented in a form of software invoked by the processor, or all units may be implemented in a form of the hardware circuit, or a part of the units may be implemented in a form of software invoked by the processor, and the other part of the units may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or a part of the units of the foregoing apparatus may be integrated together, or may be implemented independently. In an implementation, these units are integrated and implemented in a form of a SoC. The SoC may include at least one processor, configured to implement any foregoing method or implement functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the method or the steps performed in the foregoing embodiments.

Optionally, if the apparatus is located in a vehicle, the processing unit may be the processors 121 to 12n shown in FIG. 1.

An embodiment of this application further provides a longitudinal control system. The longitudinal control system includes the autonomous driving controller, the motor controller, and the hydraulic braking controller. The autonomous driving controller may include the apparatus 500.

An embodiment of this application further provides a vehicle. The vehicle may include the apparatus 500, or include the longitudinal control system.

An embodiment of this application further provides a computer program product. The computer program product includes computer program code. When the computer program code is run on a computer, the computer is enabled to perform the method.

An embodiment of this application further provides a computer-readable medium. The computer-readable medium stores program code. When the computer program code is run on a computer, the computer is enabled to perform the method.

In an implementation process, steps in the foregoing method can be implemented by using a hardware integrated logic circuit in a processor, or by using instructions in a form of software. The method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor. To avoid repetition, details are not described herein again.

It should be understood that in embodiments of this application, the memory may include the read-only memory and the random access memory, and provide instructions and data for the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, or a network device) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A longitudinal control system, wherein the longitudinal control system comprises an autonomous driving controller, a motor controller, and a hydraulic braking controller, the autonomous driving controller is connected to the motor controller, and the autonomous driving controller is connected to the hydraulic braking controller;
the autonomous driving controller is configured to obtain braking requirement torque;
the autonomous driving controller is further configured to send a first instruction to the motor controller and a second instruction to the hydraulic braking controller based on a relationship between the braking requirement torque and maximum regenerative torque of the motor controller;
the motor controller is configured to control, according to the first instruction, a drive motor to perform electric braking; and
the hydraulic braking controller is configured to control, according to the second instruction, a hydraulic actuator to perform a corresponding operation.

2. The system according to claim 1, wherein when the braking requirement torque is greater than the maximum regenerative torque, the first instruction indicates the maximum regenerative torque, the second instruction indicates first hydraulic braking torque, and the first hydraulic braking torque is determined based on the braking requirement torque and the maximum regenerative torque;
the motor controller is configured to control, according to the first instruction, the drive motor to perform electric braking based on the maximum regenerative torque; and
the hydraulic braking controller is configured to control, according to the second instruction, the hydraulic actuator to output the first hydraulic braking torque.

3. The system according to claim 2, wherein
the autonomous driving controller is further configured to send a third instruction to the motor control and a fourth instruction to the hydraulic braking controller, the third instruction indicates first electric braking torque, the first electric braking torque is a difference between the maximum regenerative torque and first torque, the fourth instruction indicates second hydraulic braking torque, and the second hydraulic braking torque is a sum of the first hydraulic braking torque and the first torque;
the motor controller is configured to control, according to the third instruction, the drive motor to perform electric braking based on the first electric braking torque; and
the hydraulic braking controller is configured to control, according to the fourth instruction, the hydraulic actuator to output the second hydraulic braking torque.

4. The system according to claim 1, wherein when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling;
the motor controller is configured to control, according to the first instruction, the drive motor to perform electric braking based on the braking requirement torque; and
the hydraulic braking controller is configured to control, according to the second instruction, the hydraulic actuator to perform pre-filling.

5. The system according to claim 4, wherein the second instruction comprises information about second preset torque; and
the hydraulic braking controller is configured to control, according to the second instruction, the hydraulic actuator to output the second preset torque.

6. The system according to claim 4, wherein the hydraulic actuator comprises a caliper and a brake disc; and
the hydraulic braking controller is configured to control, according to the second instruction, the caliper to approach the brake disc.

7. The system according to claim 1, wherein when the braking requirement torque is less than or equal to a difference between the maximum generative torque and first preset torque, the first instruction indicates the braking requirement torque;
the motor controller is configured to control, according to the first instruction, the drive motor to perform electric braking based on the braking requirement torque; and
the hydraulic braking controller is configured to control, according to the second instruction, the hydraulic actuator not to operate.

8. The system according to any one of claims 1 to 7, wherein the first instruction comprises a deceleration rotational speed or a deceleration phase of the drive motor; and
the motor controller is configured to control, based on the deceleration rotational speed or the deceleration phase of the drive motor, the drive motor to perform electric braking.

9. A longitudinal control method, wherein the method is applied to an autonomous driving controller, the autonomous driving controller is connected to a motor controller, the autonomous driving controller is connected to a hydraulic braking controller, and the method comprises:
obtaining, by the autonomous driving controller, braking requirement torque; and
sending, by the autonomous driving controller, a first instruction to the motor controller and a second instruction to the hydraulic braking controller based on a relationship between the braking requirement torque and maximum regenerative torque of the motor controller, wherein the first instruction indicates the motor controller to perform electric braking, and the second instruction instructs the hydraulic braking controller to perform a corresponding operation.

10. The method according to claim 9, wherein when the braking requirement torque is greater than the maximum regenerative torque, the first instruction indicates the maximum regenerative torque, the second instruction indicates first hydraulic braking torque, and the first hydraulic braking torque is determined based on the braking requirement torque and the maximum regenerative torque.

11. The method according to claim 10, wherein the method further comprises:
sending, by the autonomous driving controller, a third instruction to the motor control and a fourth instruction to the hydraulic braking controller, wherein the third instruction indicates first electric braking torque, the first electric braking torque is a difference between the maximum regenerative torque and first torque, the fourth instruction indicates second hydraulic braking torque, and the second hydraulic braking torque is a sum of the first hydraulic braking torque and the first torque.

12. The method according to claim 9, wherein when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling.

13. The method according to claim 12, wherein the second instruction comprises information about second preset torque.

14. The method according to claim 12, wherein the second instruction instructs the hydraulic braking controller to control a caliper to approach a brake disc.

15. The method according to claim 9, wherein when the braking requirement torque is less than or equal to a difference between the maximum generative torque and first preset torque, the first instruction indicates the braking requirement torque.

16. The method according to any one of claims 9 to 15, wherein the first instruction comprises a deceleration rotational speed or a deceleration phase of the drive motor, and the deceleration rotational speed or the deceleration phase is used to determine electric braking torque.

17. A longitudinal control apparatus, wherein the apparatus is used in an autonomous driving controller, the autonomous driving controller is connected to a motor controller, the autonomous driving controller is connected to a hydraulic braking controller, and the apparatus comprises:
an obtaining unit, configured to obtain braking requirement torque; and
a sending unit, configured to send a first instruction to the motor controller and a second instruction to the hydraulic braking controller based on a relationship between the braking requirement torque and maximum regenerative torque of the motor controller, wherein the first instruction indicates the motor controller to perform electric braking, and the second instruction instructs the hydraulic braking controller to perform a corresponding operation.

18. The apparatus according to claim 17, wherein when the braking requirement torque is greater than the maximum regenerative torque, the first instruction indicates the maximum regenerative torque, the second instruction indicates first hydraulic braking torque, and the first hydraulic braking torque is determined based on the braking requirement torque and the maximum regenerative torque.

19. The apparatus according to claim 18, wherein the sending unit is further configured to:
send a third instruction to the motor control and a fourth instruction to the hydraulic braking controller, wherein the third instruction indicates first electric braking torque, the first electric braking torque is a difference between the maximum regenerative torque and first torque, the fourth instruction indicates second hydraulic braking torque, and the second hydraulic braking torque is a sum of the first hydraulic braking torque and the first torque.

20. The apparatus according to claim 17, wherein when the braking requirement torque is greater than a difference between the maximum generative torque and first preset torque, and is less than or equal to the maximum regenerative torque, the first instruction indicates the braking requirement torque, and the second instruction instructs the hydraulic braking controller to perform pre-filling.

21. The apparatus according to claim 20, wherein the second instruction comprises information about second preset torque.

22. The apparatus according to claim 20, wherein the second instruction instructs the hydraulic braking controller to control a caliper to approach a brake disc.

23. The apparatus according to claim 17, wherein when the braking requirement torque is less than or equal to a difference between the maximum generative torque and first preset torque, the first instruction indicates the braking requirement torque.

24. The apparatus according to any one of claims 17 to 23, wherein the first instruction comprises a deceleration rotational speed or a deceleration phase of the drive motor, and the deceleration rotational speed or the deceleration phase is used to determine electric braking torque.

25. A longitudinal control apparatus, comprising:
a memory, configured to store a computer program; and
a processor, configured to execute the computer program stored in the memory, to enable the apparatus to perform the method according to any one of claims 9 to 16.

26. An autonomous driving controller, comprising the apparatus according to any one of claims 17 to 25.

27. A vehicle, comprising the apparatus according to any one of claims 17 to 25, or comprising the autonomous driving controller according to claim 26.

28. A computer-readable storage medium, wherein the computer-readable storage medium stores a computer program, and when the computer program is executed by a computer, the method according to any one of claims 9 to 16 is implemented.

29. A chip, comprising a circuit, wherein the circuit is configured to perform the method according to any one of claims 9 to 16.
